# EUROPÄISCHE PATENTANMELDUNG

(11) **EP 3 933 685 A1**
(43) Veröffentlichungstag der Anmeldung: **05.01.2022**
(21) Anmeldenummer: 21182682.1
(22) Anmeldetag: 30.06.2021
(51) Int. Cl.: G06K 9/00, G06K 9/62

(54) **VERFAHREN UND SYSTEM ZUR AUTOMATISCHEN ANALYSE VON SPORTVERANSTALTUNGEN**

(30) Priorität: 01.07.2020 DE 102020117372
(71) Anmelder: Sporttotal Technology GmbH, 50829 Köln (DE)
(72) Erfinder: Schleicher, Marco, 83043 Bad Aibling (DE); Dürr, Tobias, 53501 Grafschaft (DE); Frey, Alexander, 10405 Berlin (DE); Buschner, Maximilian, 10119 Berlin (DE)
(74) Vertreter: Richly & Ritschel Patentanwälte PartG mbB

(57) **Zusammenfassung**

Ein Verfahren und System zur automatischen Analyse von Spielereignissen mittels künstlicher Intelligenz wird beschrieben.

## Beschreibung

### GEBIET DER ERFINDUNG

Die Erfindung ist gerichtet auf ein Verfahren und System zur automatischen Analyse von Sportveranstaltungen.

### HINTERGRUND

Bei der Übertragung von Sportveranstaltungen, insbesondere Ballsporten, an ein elektronisches Endgerät ist es üblich, dass über Spielereignisse des Spiels informiert wird. Dies kann durch die Anzeigen der Spielereignisse in dem elektronischen Endgerät erfolgen. Um diese Spielereignisse zu gewinnen ist es meistens erforderlich, dass menschliche Beobachter die Vorkommisse des Spiels beobachten, und anhand dieser Vorkommnisse bewerten, ob ein für das Spiel relevantes Spielereignis, wie ein Tor, stattgefunden hat. Eine solche Bewertung durch menschliche Beobachter ist sehr teuer und es gibt daher ein Bedürfnis, eine automatische Analyse von Sportveranstaltungen durchzuführen.

Ferner ist es bekannt, dass die Produktion von audiovisuellen Übertragungen von Sportveranstaltungen in automatischer Form, d.h. ohne Einsatz eines Kameramanns am Ort der Sportveranstaltung selbst, erfolgen kann. Es wäre wünschenswert, derartige System weiter zu verbessern.

Aufgabe der vorliegenden Erfindung ist es, ein System bereitzustellen, das die oben genannten Nachteile überwindet.

### ZUSAMMENFASSUNG

Die Lösung dieser Aufgabe ist in den Ansprüchen definiert.

Offenbart wird ein Verfahren bzw. System, das unter Verwendung von Deep-Learning Modulen Spielereignisse einer Sportveranstaltung automatisch bestimmt. Ferner wird durch das Verfahren eine automatische Kameraführung ermöglicht.

Insbesondere wird ein Verfahren zur automatischen Analyse von Spielereignissen einer Sportveranstaltung offenbart, umfassend:
a. Erhalten eines audiovisuellen Datenstroms der Sportveranstaltung;
b. Bestimmen mindestens zweier Vorkommnisse in dem audiovisuellen Datenstrom, die mit einem Spielereignis assoziiert sind, mit ersten Deep-Learning Modulen, wobei für die Bestimmung jedes Vorkommnis ein eigenes Vorkommnis-spezifisches Deep-Learning Modul vorgesehen ist;
c. Bestimmen des Spielereignisses basierend auf dem Ergebnis ausgegeben durch die Vorkommnis-spezifischen Deep-Learning Module für das Spielereignis mit einem Ereignis-spezifischen Deep-Learning Model;
d. Ausgabe des Ergebnisses aus Schritt c.

Es wurde festgestellt, dass der modulare Aufbau des Deep-Learning Systems bzw. Verfahrens zu einer höheren Präzision in Hinblick auf die Ergebnisse liefert, als bei der Verwendung eines einzigen Deep-Learning Moduls oder Modulen, die Vorkommnisse mittels Methoden erkennen, die nicht dem Bereich des Deep-Learnings zuzuordnen sind.

### Schritt a) kann ferner umfassen:

Erhalten eines audiovisuellen Datenstroms der Sportveranstaltung;
Aufspalten des audiovisuellen Datenstroms in einen Video- und einen Audiodatenstrom;
wobei Schritt c) ferner umfasst:
mindestens eines der Vorkommnisse, die mit dem Spielereignis assoziiert sind, wird in dem Videodatenstrom durch ein für das Vorkommnis spezifisches Deep-Learning Modul bestimmt,
und mindestens eines der Vorkommnisse, die mit dem Spielereignis assoziiert sind, wird in dem Audiodatenstrom durch für das Vorkommnis spezifisches Deep-Learning Modul bestimmt.

Hierbei ist der Vorteil, dass eine bessere Präzision erreicht werden konnte, wenn Ergebnisse die basierend auf den Audiodatenstrom und dem Videodatenstrom erhalten wurden, kombiniert wurden.

Das Spielereignis-spezifische Modul kann ein Modul zur Bestimmung des Beginnes oder der Fortsetzung eines Spiels ist.

Das Spielereignis-spezifische Modul kann ein Modul zur Bestimmung eines Punktes in der Spielwertung ist.

Die Vorkommnis-spezifischen Module können ein Modul zum Bestimmen des Beginnes oder der Fortsetzung des Spiels in einem vorbestimmten Bereich in dem Videodatenstrom, und/oder
ein Modul zum Bestimmen eines erzielten Punktes Spiels in einem vorbestimmten Bereich des Spielortes in dem Videodatenstrom sein.

Die Vorkommnis-spezifischen Module können ein Modul zum Bestimmen der akustischen Reaktion des Publikums in dem Audiodatenstrom ist, und/oder

ein Modul zum Bestimmen der akustischen Signale des Schiedsrichters mit einem für die akustischen Schiedsrichtersignale spezifischem Deep-Learning Modul Publikums in dem Audiodatenstrom sein.

### Schritt 1.a) kann zusätzlich umfassen:

Bestimmen der Position der unbeweglichen Objekte des Spielortes in dem Videodatenstrom, die an oder auf dem Spielfeld vorgesehen sind mit einem Objekt-spezifischen Deep-Learning Model, wobei das Ergebnis dieser Bestimmung zu den Vorkommnis-spezifischen Module übertragen wird.

Durch diesen Schritt wird erreicht, dass die nicht-beweglichen Merkmale eines Spielfeldes erkannt werden können.

### Schritt a) kann zusätzlich umfassen:

Bestimmen der Position und Identität der beweglichen Objekte in dem Videodatenstrom, die an der Sportveranstaltung teilnehmen, mit einem für bewegliche Objekte spezifischem Deep-Learning Model.

Die beweglichen Objekte können die Spieler sein, und in Schritt a) kann ferner umfassen:
Bestimmen der Zugehörigkeit der Spieler zu einer Mannschaft mit einem für die Mannschaftszugehörigkeit spezifischem Deep-Learning Modul basierend auf dem Ergebnis der Positions- und Identitätsbestimmung.

### Schritt a) kann ferner umfassen:

Bestimmen der Bewegungsmuster und des Laufweges der Spieler mit einem Modul basierend auf dem Ergebnis der Positions-Identitäts- und Mannschaftszugehörigkeitsbestimmung.

Die beweglichen Objekte können Schiedsrichter und/oder Torhüter sein, und Schritt a) kann ferner umfassen:
Bestimmen der Handlungen der Schiedsrichter und der Torhüter mit einem für den Schiedsrichter spezifischem Deep-Learning Modul basierend auf dem Ergebnis der der Positions- und Identitätsbestimmung.

Die Ausgabe des Ergebnisses in Schritt d) kann an ein Modul zur Analyse der Spielveranstaltung übermittelt wird.

Das Verfahren kann ferner den Schritt umfassen:
Erstellen eines Datensatzes umfassend die bestimmten Spielereignisse und den Spielstand durch das Modul zur Analyse der Spielveranstaltung.

Die Vorkommnis-spezifisches Deep-Learning Module können 40-80 Schichten aufweisen; und/oder die Ereignis-spezifisches Deep-Learning Module können 10-15 Schichten aufweisen.

Das Verfahren kann ferner den Schritt umfassen:
Bestimmen in dem Videodatenstream einen Teilbereichs des Videodatenstreams, in dem die zentrale Handlung des Spiels vorgenommen wird mit einem Videodaten-Erstellungs-Deep-Learning Modul,
Erstellen eines zweiten Videodatenstroms, bei dem jeder Frame nur den bestimmten Teilbereich des ersten Videodatenstroms enthält.

Dass Verfahren kann ferner den Schritt umfassen:
Einbetten der bestimmten Spielereignisse und des Spielstandes, des zum ersten Videodatenstrom gehörenden Audiodatenstroms und des zweiten Videodatenstroms in einen Datencontainer.

Weiterhin wird ein Verfahren zum Trainieren eines Deep-Learning Systems offenbart umfassend Deep-Learning Module umfassend:
a. Bereitstellen von untrainierten mindestens zwei Deep-Learning Modulen;
b. Trainieren der mindesten zwei Deep-Learning Module mit einem ersten Satz an audiovisuellen Datenströmen von Sportveranstaltungen, wobei in jedem Datenstrom des Satzes die Vorkommnisse der Sportveranstaltung annotiert sind und die zweier Vorkommnisse in dem audiovisuellen Datenstrom einem Spielereignis assoziiert sind;
c. Erhalten von mindestens zwei trainierten Vorkommnis-spezifisches Deep-Learning Modulen;
d. Bereitstellen eines Deep-Learning System bestehend aus den mindestens zwei trainierten Vorkommnis-spezifisches Deep-Learning Modulen und eines untrainierten weiteren Deep-Learning Moduls, das die Ergebnisse der mindestens zwei trainierten Vorkommnis-spezifisches Deep-Learning Module als Input erhält;
e. Trainieren des weiteren untrainierten Deep-Learning Moduls in dem System mit einem zweiten Satz an audiovisuellen Datenströmen von Sportveranstaltungen, ohne weiteres Training der Vorkommnis-spezifisches Deep-Learning Module, wobei in jedem Datenstrom des Satzes die Ereignisse der Sportveranstaltung annotiert sind;
f. Erhalten eines trainierten Deep-Learning Systems zur Bestimmung von Spielereignissen einer Sportveranstaltung.

Der erste und der zweite Satz an audiovisuellen Datenströmen können mindestens 10000, 50000, oder 100000 audiovisuelle Datenströme von Sportveranstaltungen umfassen.

Weiterhin wird ein Computersystem offenbart umfassend das Deep-Learning System erhältlich durch das obige Trainingsverfahren und konfiguriert, das obige Verfahren zur Bestimmung von Spielereignissen durchzuführen.

Weiterhin wird ein Kamerasystem offenbart umfassend das oben beschriebene Computersystem.

### FIGUREN

Figur 1 illustriert ein Deep-Learning System aus Vorkommnis-spezifisches Deep-Learning Modulen und einem Ereignis-spezifischen Deep Learning Modul.
Figur 2 illustriert ein Beispiel eines Deep-Learning System aus Vorkommnis-spezifisches Deep-Learning Modulen und einem Ereignis-spezifischen Deep Learning Modul.
Figur 3 illustriert ein Beispiel eines Deep-Learning System aus Vorkommnis-spezifisches Deep-Learning Modulen und einem Ereignis-spezifischen Deep-Learning Modul, wobei die Vorkommnis-spezifischen Deep-Learning Module sowohl auf den Audiodaten als auch auf den Videodaten operieren.
Figur 4 illustriert einen detaillierten Aufbau eines Deep-Learning Systems.
Figur 5 illustriert die Funktionsweise eines Deep-Learning Systems in der Autoproduktion.
Figur 6 illustriert das Trainieren eines Deep-Learning Systems.

### DETAILLIERTE BESCHREIBUNG

### Definitionen

Der Begriff "Sportveranstaltung" meint jegliches zeitliche begrenzte Durchführen eines sportlichen Wettbewerbes. Insbesondere können Sportveranstaltungen Mannschaftsveranstaltungen bzw. ein Spiel zwischen zwei Mannschaften sein. Insbesondere kann die Sportveranstaltung ein Ballsport sein, wobei es Ballsportarten mit einzelnen Teilnehmern oder Mannschaften sein können. Der Ball kann kugelförmig, ovalförmig, scheibenförmig oder ringförmig sein. Die Sportveranstaltung kann ein Torspiel, insbesondere Fußball, Basketball, American Football, oder Handball, oder ein Rückschlagspiel, insbesondere Tennis, Tischtennis, oder Badminton sein, ein Schlagballspiel, insbesondere Baseball, Cricket oder Softball sein.

Bei einer Sportveranstaltung gibt es einen Spielort oder ein Spielfeld, auf dem die Sportveranstaltung ausgetragen wird. Auf diesem Spielort gibt es nicht bewegliche Objekte, die für durch die Durchführung der Spielveranstaltung gemäß den Regeln der Sportveranstaltung relevant sind. Im Fußball können dies der Anstoßkreis, die Ecken, der Torraum, die Außenlinien am Tor oder/und an der Seite, und/oder die Mittellinie sein. Beim Basketball können dies Seitenauslinien, die Endlinien, die Mittellinie, Mittelkreis, die Zone um die Körbe, der Halbkreis, die Dreipunkte-Linie, und/oder der No-Charging-Halbkreis.

Der Begriff "Spielereignis" meint jedes bedeutsame Ereignis bei einer Sportveranstaltung. Ein Spielereignis ergibt sich aus Handlungen der Teilnehmer der Sportveranstaltung, aber nicht anderer Personen oder Vorkommnisse (also z.B. nicht der Zuschauer). Spielereignisse sind je nach Sportart unterschiedlich. Spielereignisse können ein nach den Regeln der Sportveranstaltung oder des Spiels relevante Ereignisse sein. Spielereignisse können das Erzielen eines Punktes oder Tores sein, also zur Änderung des Spielstandes der Sportveranstaltung führen. Spielereignisse können der Beginn, das Unterbrechen, Fortführen nach Unterbrechung oder das Beenden der Sportveranstaltung sein. Spielereignisse können das Verwarnen oder Bestrafen eines Spielers oder sonstigen Anwesenden bei der Sportveranstaltung sein, die sich gegen die betroffene Person richtet. Spielereignisse können Spielstrafen (z.B. ein Strafstoß, ein Strafschuss), die sich gegen die ganze betroffene Mannschaft richtet.

Der Begriff "Vorkommnis" meint ein Vorkommnis, das mit einem (Spiel)Ereignis oder einem anderen Vorkommnis zeitlich oder konditional assoziiert, aber nicht identisch mit dem betreffenden Spielereignis ist. Ein Vorkommnis kann sich aus Handlungen von Anwesenden bei der Sportveranstaltung (z.B. Spieler, Schiedsrichter, Publikum) ergeben. Das Spielereignis "Erzielen eines Tores" beim Fußball kann beispielsweise mit den ungefähr gleichzeitigen auftretenden Vorkommnissen "Spielball hinter der Torlinie," "Handhaltung des Schiedsrichters," und "Jubel durch das Publikum" assoziiert sein. Ferner kann das Spielereignis "Erzielen eines Tores" mit den zeitlich davorliegenden Ereignissen "Fortführen des Spiels nach Unterbrechung" oder "Beginn des Spiels" assoziiert sein. Die Vorkommnisse sind demnach, wenn sie in geeignet Kombination und Intensität auftreten, Indikatoren dafür, dass ein Spielerereignis stattgefunden hat. Vorzugsweise stehen die detektierten Vorkommisse nicht in einer engen räumlichen Beziehung zueinander.

Das vorliegende System ist darauf ausgerichtet, Vorkommnisse mittels geeigneter Module zu bestimmen, wobei die Module eine Wahrscheinlichkeit für das Auftreten dieser Vorkommnisse ausgeben. Das Ergebnis dieser "Vorkommnis-spezifischen Module" (auch Basismodule genannt) wird an "Spielereignis-spezifische Module" (auch Metamodule genannt) weitergeleitet, die aufgrund dieser eingegebenen Ergebnisse eine Wahrscheinlichkeit dafür berechnen/bestimmen, dass ein mit den Vorkommnissen assoziiertes Ergebnis aufgetreten ist.

Das System umfasst "Module", die Deep-Learning Module (Modelle) oder andere Module aus dem Bereich des Maschinenlernens sein können und andere nicht KI-basierte Module für arithmetische Transformation.

Der Begriff "Deep-Learning Module" (oder "Deep-Learning Modelle") meint künstliche neuronale Netze, die aus mehreren Schichten von Neuronen aufgebaut sind, wobei die Neuronen einer Schicht mit mindestens einer nachfolgenden Schicht verbunden sein können. Die Eingabeschicht nimmt Daten als Input auf, und übergibt diese an mindestens eine versteckte Schicht. Aus der mindestens einer verdeckten Schicht werden transformierte Daten an die Ausgabeschicht gegeben, die diese als Ergebnis ausgibt.

Die Deep-Learning Module können "Convolutional Neural Network Module" sein, d.h. Deep-Learning Module die mehrere Konvolutionen und mindestens ein Pooling Layer enthalten.

Die Deep-Learning Module können skalare Werte oder Merkmalsräume ausgeben.

Die Vorkommnis-spezifischen Deep-Learning Module können als skalaren Wert die berechnete Wahrscheinlichkeit für ein Vorkommnis als Ergebnis ausgeben.

Die Ereignis-spezifischen Deep-Learning Module können als skalaren Wert die berechnete Wahrscheinlichkeit für ein Ereignis als Ergebnis ausgeben. Die Ereignis-spezifischen Module können als Ergebnis ausgeben, dass das Vorliegen eines Ereignisses bestimmt wurde, falls die Wahrscheinlichkeit für ein Ereignis über einem vorbestimmten Schwellenwert liegt.

Die Vorkommnis-spezifischen Deep-Learning Module können mehr Schichten als die Ereignis-spezifischen Module aufweisen.

Die Vorkommnis-spezifischen Deep-Learning Module können zwischen 30-100 Schichten, 40-75, oder 45-50 Schichten aufweisen.

Die Ereignis-spezifischen Module können zwischen 5-20 Schichten, 7-15, oder 10-13 Schichten aufweisen.

Unter dem Begriff "audiovisueller Datenstrom" kann jeglicher in digitaler Form vorliegende Datenstrom verstanden werden, bei dem die Videodaten und Audiodaten in zeitsynchronisierter Form vorliegen. Die Bildauflösung kann mindestens 1280x720 Pixel, 3840 x 2160 Pixel, oder 7680 x 4320 sein.

Insbesondere kann der Videodatenstrom in Form eines Panoramavideos vorliegen. Das Panoramavideo kann durch das Zusammenfügen einer Vielzahl von Videoströmen, die durch eine entsprechende Vielzahl an Kameras aufgenommen wurden zusammengefügt worden sein. Insbesondere kann das der Videodatenstrom live aufgenommen werden und unmittelbar dem Verfahren zugeführt werden.

### Verfahren zur automatischen Analyse von Spielereignissen einer Sportveranstaltung

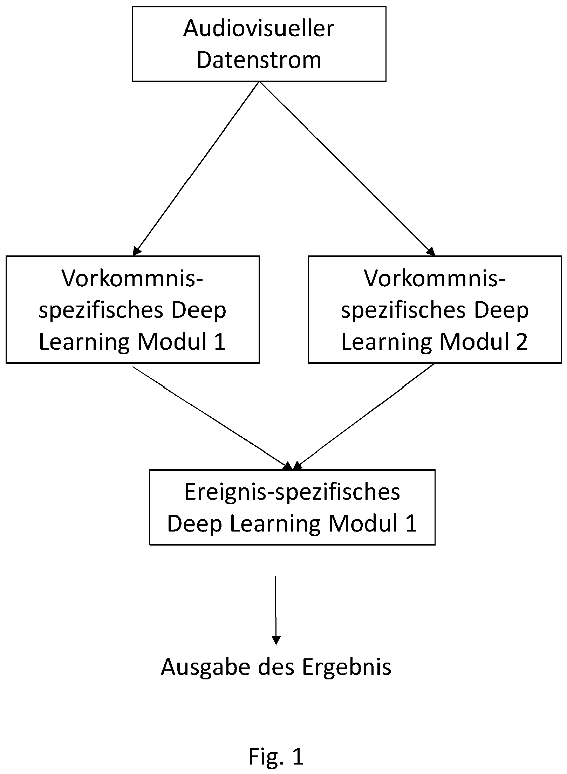

Das Verfahren zur automatischen Analyse von Spielereignissen einer Sportveranstaltung, wie in Fig. 1 illustriert, umfasst:
a. Erhalten eines audiovisuellen Datenstroms der Sportveranstaltung;
b. Bestimmen mindestens zweier Vorkommnisse in dem audiovisuellen Datenstrom, die mit einem Spielereignis assoziiert sind, mit ersten Deep-Learning Modulen, wobei für die Bestimmung jedes Vorkommnis ein eigenes Vorkommnis-spezifisches Deep-Learning Modul vorgesehen ist;
c. Bestimmen des Spielereignisses basierend auf dem Ergebnis ausgegeben durch die Vorkommnis-spezifischen Deep-Learning Module für das Spielereignis mit einem Ereignis-spezifischen Deep-Learning Model;
d. Ausgabe des Ergebnisses aus Schritt c.

Das Verfahren ist insbesondere echtzeitfähig, d.h. es in der Lage eine live eintreffenden audiovisuellen Datenstrom als Input zu verarbeiten, und die Ausgabe des Ergebnisses innerhalb kürzester Zeit bereitzustellen (z.B. innerhalb von weniger als 30 Sekunden, 20 Sekunden, 10 Sekunden oder 1 Sekunde nach Aufnahme des audiovisuellen Datenstroms in das Verfahren). Dies umfasst die Bereitstellung aller Ergebnisse, die durch die in dieser Beschreibung dargestellten Module, ausgegeben werden.

Das Vorkommnis-spezifischen Deep-Learning Model kann mindestens ein Modul zur visuellen Bestimmung eines Vorkommnisses in einem interessierenden Bereich des Spielortes/Spielfeldes in dem Videodatenstrom sein.

Ein interessierender Bereich kann ein Bereich sein, in dem ein Punkt (z.B. ein Tor oder Korb) erzielt werden kann oder ein Beginn oder die Fortsetzung des Spiels durchgeführt werden kann (z.B. eine Ecke oder Mittelkreis).

Insbesondere kann das Vorkommnis-spezifischen Deep-Learning Model mindestens ein Modul zur visuellen Bestimmung eines erzielten Punktes, wie eines Tores, sein. Das Modul kann die Ergebnisse des Moduls zum Bestimmen der Position der unbeweglichen Objekte als Input verwerten. Das Modul kann den Videodatenstrom als Input verwenden. Durch diese beiden Inputs ist das Modul in der Lage den interessierenden Bereich zu erkennen. Dabei wertet das Modul Vorkommnisse im interessierenden Bereich aus. Das Modul kann als Ergebnis die Wahrscheinlichkeit ausgeben, dass ein Punkt erzielt wurde, z.B. dass ein Tor erzielt wurde. Für jeden Ort eines Spielfeldes oder -ortes, an dem ein solcher Punkt erzielt werden kann, kann es mindestens ein separates Modul zur visuellen Bestimmung eines erzielten Punktes geben. Im Fußball kann es demnach ein Modul zur visuellen Bestimmung eines erzielten Tores im ersten (z.B. linken) Torraum und ein Modul zur visuellen Bestimmung eines erzielten Tores im zweiten (z.B. rechten) Torraum geben.

Insbesondere kann das Vorkommnis-spezifischen Deep-Learning Model ein Modul zur visuellen Bestimmung des Beginnes oder der Fortsetzung des Spiels im Videodatenstrom sein. Der interessierende Bereich kann z.B. der Mittelkreis oder der Bereich der Ecken des Spielfeldes sein. Das Modul kann die Ergebnisse des Moduls zum Bestimmen der Position der unbeweglichen Objekte als Input verwerten. Das Modul kann den Videodatenstrom als Input verwenden. Durch diese beiden Inputs ist das Modul in der Lage den interessierenden Bereich zu erkennen. Dabei wertet das Modul Vorkommnisse im interessierenden Bereich aus. Das Modul kann als Ergebnis die Wahrscheinlichkeit angeben, dass das Spiel begonnen wurde. Für jeden Ort eines Spielfeldes oder -ortes, an dem ein solcher Beginn erzielt werden kann, kann es mindestens ein separates Modul geben.

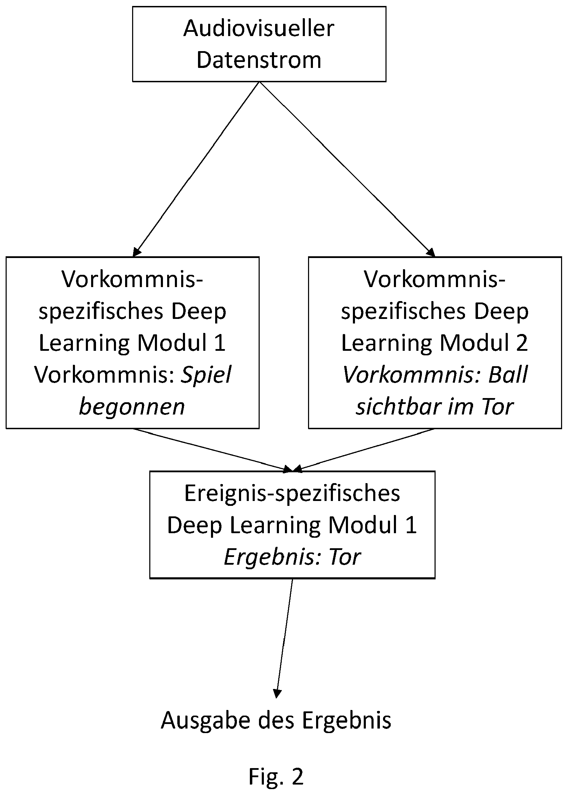

Ein Beispiel für Vorkommnis-spezifische Deep-Learning Module ist in Figur 2 illustriert. In diesem Fall ist ein erstes Vorkommnis-spezifisches Deep-Learning Modul, ein Modul zur visuellen Bestimmung des Beginnes oder der Fortsetzung des Spiels durch Analyse des Videodatenstroms. Dazu kann dieses Modul, zum Beispiel, einen bestimmten Bereich des Spielorts analysieren. Dies kann der Bereich sein, in dem das Spiel begonnen wird, wie z.B. der Anstoßkreis beim Fußball.

Ein zweitens Vorkommnis-spezifisches Deep-Learning Model kann ein Modul zur visuellen Bestimmung eines Tores oder Punktes in der Spielwertung im Videodatenstrom sein. Das Modul kann den Teil des Spielfeldes analysieren, dessen Treffen mit dem Ball zu einer Anerkennung eines Tores oder Punktes in der Spielwertung führen könnte, also im Fußball das Tor oder der Torbereich.

Dabei kann vorgesehen sein, dass für jedes Teil des Spielfeldes dessen Treffen mit dem Ball zu einer Anerkennung eines Tores oder Punktes in der Spielwertung führen könnte, ein separates Vorkommnis-spezifisches Deep-Learning Model vorgesehen ist, also z.B. beim Fußball ein Modul für das linke Tor und ein weiteres Modul für das rechte Tor. Beide Module können ihre Ergebnisse an das Vorkommnis-spezifisches Deep-Learning Modelle übermitteln.

Beide (oder bei der Analyse zweier Bereiche, deren Treffen mit dem Ball zu einer Anerkennung eines Tores oder Punktes in der Spielwertung führen könnte, alle drei) Vorkommnis-spezifisches Deep-Learning Modelle geben Werte aus, die in skalarer Form die Wahrscheinlichkeit anzeigen, dass sich das betreffende Vorkommnis ereignet hat. Diese Wahrscheinlichkeitswerte werden als Input an das Spielereignis-spezifischen Deep-Learning Model weitergegeben.

In Figur 2 ist dieses Modul, ein Modul zur Bestimmung eines Punktes in der Spielwertung.

Basierend auf dem Input kann das Spielereignis-spezifischen Deep-Learning Model eine Wahrscheinlichkeit dafür bestimmen, ob ein Spielereignis, z.B. ein Tor stattgefunden hat.

Da der Input mehrerer Vorkommnis-spezifisches Deep-Learning Module durch das Spielereignis-spezifischen Deep-Learning Model verarbeitet wird, kann das Spielereignis-spezifischen Deep-Learning Model eine zuverlässigere Wahrscheinlichkeit dafür angeben, dass das Spielereignis stattgefunden hat.

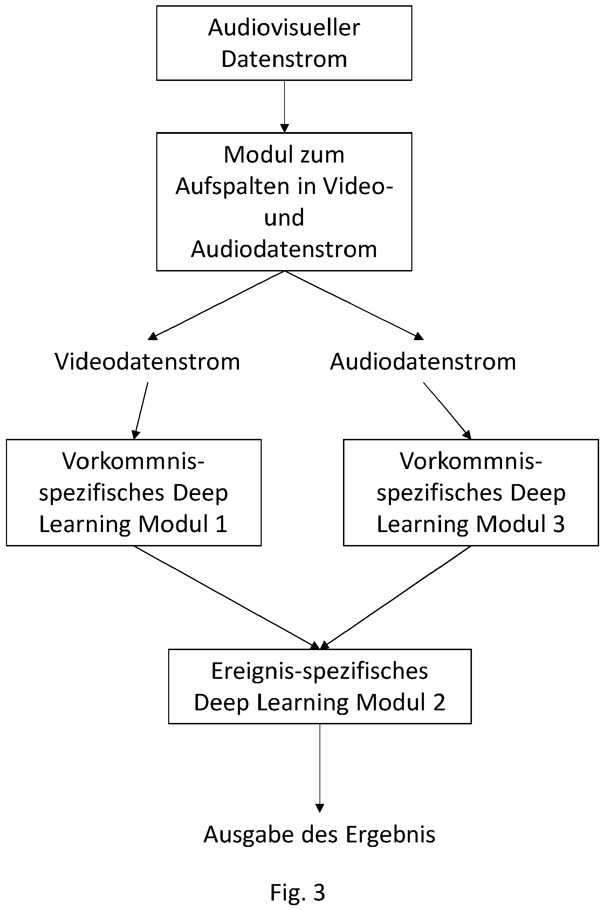

Wie in Figur 3 illustriert, können auch die Ergebnisse von Vorkommnis-spezifischen Deep-Learning Modulen, die den Videodatenstrom und den Audiodatenstrom getrennt analysieren durch ein Spielereignis-spezifisches Deep-Learning Modul berücksichtigt werden.

### Daher kann das Verfahren auch ein Verfahren umfassen, bei dem Schritt a) umfasst

Erhalten eines audiovisuellen Datenstroms der Sportveranstaltung;
Aufspalten des audiovisuellen Datenstroms in einen Video- und einen Audiodatenstrom.

Ferner kann Schritt c) umfassen, dass mindestens eines der Vorkommnisse, die mit dem Spielereignis assoziiert sind, in dem Videodatenstrom durch ein für das Vorkommnis spezifisches Deep-Learning Modul bestimmt wird, und dass mindestens eines der Vorkommnisse, die mit dem Spielereignis assoziiert sind, in dem Audiodatenstrom durch für das Vorkommnis spezifisches Deep-Learning Modul bestimmt wird.

Das Aufspalten des Datenstroms in einen Video- und einen Audiodatenstrom kann dabei durch jedes übliche Verfahren zum Demultiplexen (mittels eines geeigneten Decoders) durchgeführt werden.

Die erhaltenen (demultiplexten) Video- und Audiodatenströme können Zeitstempel erhalten.

Die Ergebnisse, die durch das mindestens eine Deep-Learning Modul, das Vorkommnisse im Videodatenstrom bestimmt, ausgegeben werden, und die Ergebnisse, die das mindestens eine Deep-Learning Modul, das Vorkommnisse im Audiodatenstrom bestimmt, ausgegeben werden, können ebenfalls Zeitstempel enthalten. Durch die Zeitstempel kann das Spielereignis bestimmende Deep-Learning Modul, die Ergebnisse der Vorkommnis-bestimmende Deel Learning Module zeitlich assoziieren.

Das Verfahren kann so durchgeführt werden, dass das Verfahren pro Frame eines Videodatenstroms durchgeführt wird, d.h. es kann eine Analyse für einen bestimmten Zeitpunkt im Datenstrom durchgeführt werden. Das Verfahren kann alternativ so durchgeführt werden, dass Analysen den Inhalt mehrerer (mindestens zweier) Frames des Videodatenstroms berücksichtigt.

Das bedeutet es können durch die Ereignis- und Vorkommnis bestimmenden Deep-Learning Module Ereignisse und Vorkommnisse über mindestens zwei oder eine Vielzahl von Frames bestimmt werden (d.h. es kann eine Analyse für einen bestimmten Bereich, der aus mehreren Zeitpunkten besteht, im Datenstrom durchgeführt werden). Dies kann als die Verwendung eines "laufenden Fensters" für die Daten angesehen werden.

Das Verfahren kann so durchgeführt werden, dass durch die Ereignis- und Vorkommnis bestimmenden Deep-Learning Module Ereignisse und Vorkommnisse über mehrere zeitliche Abschnitte der Audiodaten hinweg bestimmt werden ("laufendes Fenster" bzw. ein Bereich für die Audiodaten). Auf diese Weise können Veränderungen der Audiodaten mit in die Analyse einfließen, wie das Anschwellen oder Abschwellen von Geräuschquellen und der zeitliche Verlauf der Änderung dieses Anschwellens oder Abschwellens.

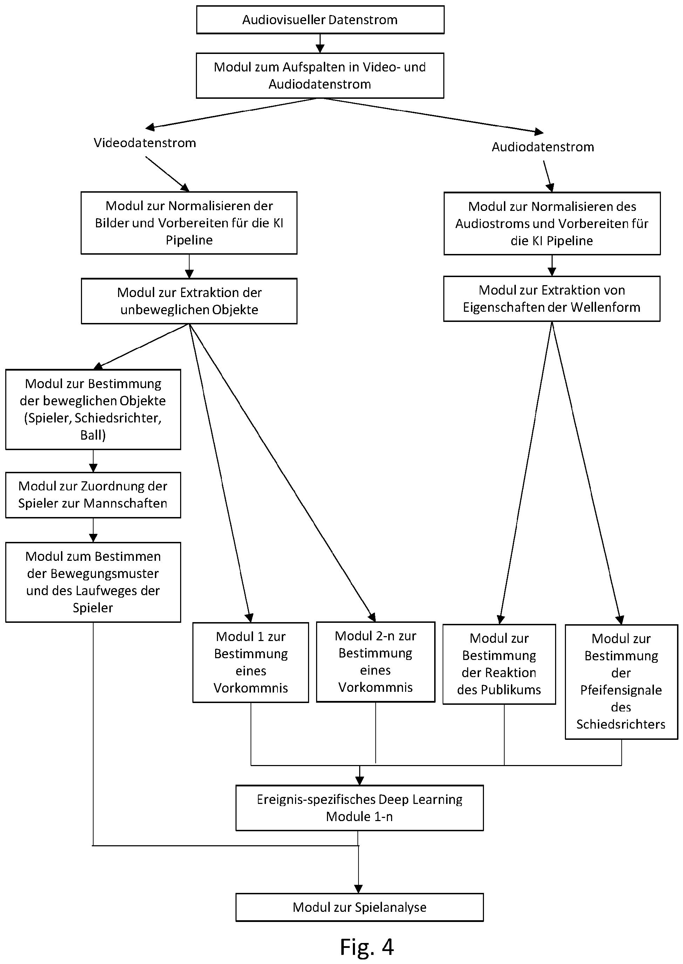

Figur 4 ermöglicht eine detaillierte Ansicht des Verfahrens.

Wie schon im Kontext zur Figur 3 erläutert, kann der audiovisuelle Datenstrom in einen Videodatenstrom und Audiodatenstrom aufgespalten werden.

Wie aus Figur 4 hervorgeht, kann das Verfahren nach dem Schritt des Aufspaltens in einen Videodatenstrom und einen Audiodatenstrom einen Schritt zum Normalisieren des Videodatenstroms bzw. der Frames/Bilder aus dem Videodatenstrom und/oder Vorbereiten der Daten für die KI Pipeline enthalten mittels eines entsprechenden Moduls enthalten. Dieses Modul braucht keine KI-Komponenten umfassen.

Das Verfahren kann einen Schritt zur Extraktion der unbeweglichen Objekte mittels eines Moduls zum Bestimmen der Position der unbeweglichen Objekte, die an oder auf dem Spielfeld vorgesehen sind. Diese Objekt-spezifische Modul bestimmt die wesentliche Merkmale des Spielfeldes oder Spielortes, wie z.B. den Rand des Spielfeldes/-ortes, einen Mittelkreis, Mittellinie oder den Torbereich, und kann als Deep-Learning Modul vorgesehen sein.

Das Verfahren kann ferner den Schritt des Bestimmens der Position der beweglichen Objekte in dem Videodatenstrom umfassen, die an der Sportveranstaltung teilnehmen, mit einem für bewegliche Objekte spezifischem Deep-Learning Model. Das Modul kann die Ergebnisse des Moduls zum Bestimmen der Position der unbeweglichen Objekte als Input verwerten. Das Modul kann auch die Strecke, die die beweglichen Objekte an dem Spielort/auf dem Spielfeld zurücklegen, erfassen.

Die zu bestimmenden beweglichen Objekte können die Spieler, der oder die Schiedsrichter und/oder das Spielgerät, wie der Ball sein.

Ferner kann das Verfahren den Schritt des Bestimmens der Zugehörigkeit der Spieler zu einer Mannschaft mit einem für die Mannschaftszugehörigkeit spezifischem Deep-Learning Modul umfassen. Dieses Modul kann dabei die Ergebnisse des für bewegliche Objekte spezifischem Deep-Learning Models verarbeiten.

Dabei kann das für die Mannschaftszugehörigkeit spezifische Deep-Learning Modul aus zwei Submodulen bestehen. Das erste Submodul kann für alle zuvor der Position nach bestimmten Spieler eine Projektion eines jedes Spielers in einen Merkmalsraum erstellen. Der Merkmalsraum kann eine Größe von 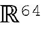 bis 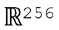 besitzen oder eine Größe von 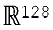 besitzen. Das zweite Submodul kann basierend auf den Merkmalen aus dem Merkmalsraum eine Clustering-Analyse durchführen, und die Spieler mittels Clusteranalyse zu den Mannschaften zuordnen. Bei Submodule gehören zu der Klasse der Convolutional Neural Networks (CNN). Es hat sich als vorteilhafter erwiesen die Analyse zur Mannschaftszugehörigkeit über zwei getrennte Module durchzuführen, da dadurch die Ergebnisse zuverlässiger wurden als bei Verwendung eines Moduls.

Das Verfahren kann ferner einen Schritt umfassen zum Bestimmen der Bewegungsmuster und des Laufweges der Spieler mit einem (für Bewegungsmuster und Laufwege spezifischen) Modul basierend auf dem Ergebnis der Bestimmungen des für bewegliche Objekte spezifischen Maschinenlern-Moduls (zur Bestimmung der Position der Spieler und des Balles) und/oder des für die Mannschaftszugehörigkeit spezifischen Deep-Learning Moduls. Das Modul kann als Ergebnis die Laufleistung der Spieler, die Größe des Ballbesitzes pro Spieler und/oder Mannschaft, die Anzahl der Torschüsse pro Spieler/pro Mannschaft, und/oder eines Dominanzfaktors der Mannschaften, der sich aus den vorgenannten Faktoren berechnet, ausgeben.

Das Verfahren kann ferner den Schritt des Bestimmens der Handlungen der Schiedsrichter und der Torhüter mit einem für den Schiedsrichter spezifischem Deep-Learning Modul umfassen. Das Modul kann die Ergebnisse des Moduls zum Bestimmen der Position der unbeweglichen Objekte und des Moduls zum Bestimmen der Position der beweglichen Objekte als Input verwerten.

Ferner kann das Verfahren ein Schritt umfassen, die Ergebnisse der Vorkommnis-spezifischen Module, der Spielereignis-spezifischen Module und des Moduls zum Bestimmen der Bewegungsmuster und des Laufweges der Spieler zusammenzutragen und zu analysieren und z.B. den Spielstand zu ermitteln. Dies geschieht durch ein Modul zur Spielanalyse. Das Modul zur Spielanalyse kann auch bestimmen oder/und ausgeben, welcher Spieler oder welche Mannschaft einen Punkt erzielt hat. Das Modul kann auch bestimmen oder/und ausgeben, wieviel Ballbesitz eine Mannschaft aufweist.

Alle oder Teile dieser durch das Modul zur Spielanalyse ermittelten Daten (insbesondere zu den Spielereignissen) können gespeichert werden (z.B. Realtime cache oder auf festem Datenträger) und/oder an andere Module direkt oder über das Internet übertragen werden (z.B. an ein Data Warehouse, an eine Webplattform, an Business Intelligence (Software) Tools).

Vorzugsweise ist in dem Verfahren das Spielereignis-spezifische Modul ein Modul zur Bestimmung des Beginnes oder der Fortsetzung eines Spiels ist.

Vorzugsweise ist in dem Verfahren das Spielereignis-spezifische Modul ein Modul zur Bestimmung eines Punktes in der Spielwertung ist, z.B. eines Tores, das ebenfalls in dem Verfahren zum Einsatz kommt.

In dem Verfahren können diese Spielereignis-spezifische Module Ergebnisse der folgenden Vorkommnis-spezifischen Module verarbeiten:
Modul zum Bestimmen des Beginnes oder der Fortsetzung des Spiels in einem vorbestimmten Bereich in dem Videodatenstrom,
Modul zum Bestimmen eines erzielten Punktes Spiels in einem vorbestimmten Bereich des Spielortes in dem Videodatenstrom ist.
Modul zum Bestimmen der akustischen Reaktion des Publikums in dem Audiodatenstrom ist, und/oder
Modul zum Bestimmen der akustischen Signale des Schiedsrichters mit einem für die akustischen Schiedsrichtersignale spezifischem Deep Learning Modul Publikums in dem Audiodatenstrom.

Insbesondere konnten die Ergebnisse der Ereignis-spezifischen Module verbessert werden, wenn Ergebnisse, die aus dem Videodatenstrom und dem Audiodatenstrom kombiniert wurden.

Insbesondere die Kombination aller vier oben genannte Vorkommnis-spezifischen Module führte zu zuverlässigeren Ergebnissen der Spielereignis-spezifischen Module als wenn nur Ergebnisse von zwei oder drei der Vorkommnis-spezifischen Module kombiniert wurden.

Ferner kann das Verfahren nach dem Schritt des Aufspaltens in einen Videodatenstrom und einen Audiodatenstrom einen Schritt zum Normalisieren des Audiostroms und Vorbereiten der Daten für die KI Pipeline enthalten mittels eines entsprechenden Moduls enthalten. Dieses Modul braucht keine KI-Komponenten umfassen.

Das Verfahren kann ferner einen Schritt zur Extraktion der Eigenschaften der Wellenform des Audiodatenstroms mittels eines entsprechenden Moduls. Die Eigenschaften können die Amplitude, Frequenz, Wellenform, Zusammensetzung der Wellenform aus Grundwellenformen und andere sein.
Dieses Modul braucht keine KI-Komponenten umfassen. Durch dieses Modul werden die Eigenschaften der Wellenform als Ergebnis ausgegeben.

Das Verfahren kann ferner einen Schritt des Bestimmens der akustischen Reaktion des Publikums mit einem für die Publikumsreaktion spezifischem Deep-Learning Modul umfassen, wobei dieses Modul ein Vorkommnis-spezifisches Deep-Learning Modul ist. Dieses Modul kann die Ergebnisse des Moduls zur Extraktion der Eigenschaften der Wellenform des Audiodatenstroms als Input verwenden. Die akustische Reaktion kann der Jubel des Publikums sein. Das Ergebnis der Bestimmung ist die Wahrscheinlichkeit und/oder Stärke der Reaktion des Publikums.

Das Verfahren kann ferner einen Schritt des Bestimmens der akustischen Signale, z.B. der Pfeifsignale des Schiedsrichters, mit einem für die Pfeifsignale spezifischem Deep-Learning Modul umfassen. Dieses Modul ist ein Vorkommnis-spezifisches Deep-Learning Modul. Dieses Modul kann die Ergebnisse des Moduls zur Extraktion der Eigenschaften der Wellenform des Audiodatenstroms als Input verwenden. Das Ergebnis der Bestimmung ist die Wahrscheinlichkeit und/oder Art des akustischen Signals.

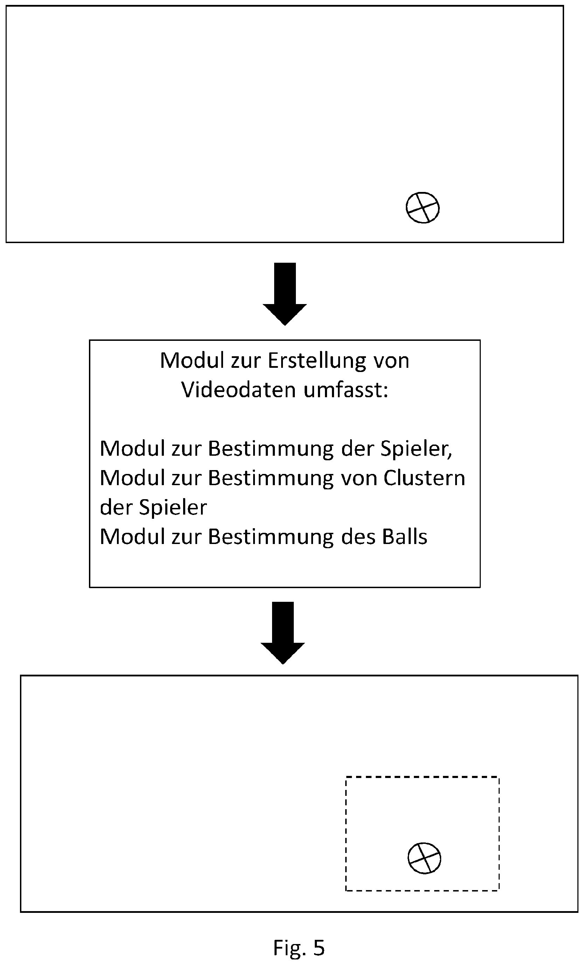

Ferner kann das Verfahren ein Modul umfassen, wie in Figur 5 illustriert, das ferner folgenden Schritt ausführt:
Bestimmen in dem Audiovideostream eines Teilbereichs des Videodatenstreams, in dem sich die zentrale Handlung des Spiels vorgenommen wird mit einem Videodaten-Erstellungs-Deep-Learning Modul und Erstellen eines weiteren Videodatenstroms, bei dem jeder Frame nur den bestimmten Teilbereich des ersten Videodatenstroms enthält. Ein Teilbereich des Videodatenstroms ist hier als ein Teilbereich eines Bildes (Frames) aus dem Videodatenstrom zu verstehen.
Das Modul verwendet als Input die Ergebnisse der Bestimmungen des für bewegliche Objekte spezifischen Deep-Learning Module (zur Position der Spieler und des Balles) und/oder eines Deep-Learning Moduls zur Bestimmung von Clustern der Spieler. In Figur 5 ist nur ein Ball illustriert, es werden aber vorzugsweise alle Ergebnisse der genannten Module verwendet. Das Deep-Learning Modul zur Bestimmung von Clustern benützt auch die Ergebnisse der Module zur Bestimmung der Position der Spieler. Das Modul verwendet auch den Videodatenstrom als Input. Durch diese Inputs ist das Modul zur Erstellung eines weiteren Videodatenstroms in der Lage den Bereich des Spielortes bzw. den Teilbereich im Videodatenstrom zu erkennen, der für die Verfolgung des Spiels durch einen Zuschauer von Interesse ist und den Bildausschnitt zu bestimmen, der an einen Nutzer des Endgeräts übermittelt werden kann (gestrichelte Box in Figur 5). Somit ist eine Autoproduktion von Streaminginhalten ohne menschlichen Kameramann oder Regisseur möglich, bei der das Modul als virtueller Kameramann eine virtuelle Kamera bedient.

Das Training dieses Deep-Learning System kann dadurch erfolgen, dass ein untrainiertes Videodaten-Erstellungs-Deep-Learning Modul als Input die Ergebnisse der Bestimmungen des für bewegliche Objekte spezifischen trainierten Deep-Learning Module (zur Position der Spieler und des Balles) und/oder eines trainierten Deep-Learning Moduls zur Bestimmung von Clustern der Spieler erhält. Cluster von Spielern sind an den Orten, an denen die Spieler in größerer Anzahl pro Fläche des Spielfeldes im Videodatenstrom erscheinen. Ferner erhält das untrainiertes Videodaten-Erstellungs-Deep-Learning Modul den Videodatenstrom als Input. Der Trainingssatz beim Training sind durch menschliche Kameramänner erzeugte Ströme an Bildausschnitten der Videodatenströme, die als Inputdaten verwendet werden.

Die zu den Spielereignissen und dem Spielstand (scoreboard) ermittelten Daten können in einem weiteren Schritt zusammen mit dem neu erzeugten Videodatenstrom, der nur einen Teilbereich des ursprünglichen Videodatenstroms enthält, sowie dem ursprünglichen Audiodatenstrom zu einem Ausgabe-Audiovideostrom (z.B. in einem Datencontainer) mit Zusatzdaten zusammengefügt werden. Vorzugsweise sind diese Zusatzdaten (nichtaudiovisuellen Daten) derart im Datencontainer eingebettet sind, dass nur die Vorgaben an einem Endgerät bestimmen, ob die nichtaudiovisuellen Daten in einer visuellen oder optischen Form an einem Ausgabegerät, das an das Endgerät angeschlossen ist, angezeigt werden.

Das oben erläuterte Verfahren kann auf einem Computersystem ausgeführt werden. Insbesondere ist vorgesehen, dass das Computersystem den (ursprünglichen) audiovisuellen Datenstrom durch an eine Datenleitung angeschlossenes Kamerasystem direkt erhält.

Vorzugsweise erzeugt das Kamerasystem ein Panoramabild, das den ganzen Spielort umfasst. Das Kamerasystem kann mehrere Bildsensoren umfassend, die verschiedene Bereiche des Spielortes umfassen. Das Kamerasystem kann die von den einzelnen Bildsensoren erzeigten Teilbilder zu einem Panoramabild zusammenfügen.

Das Computersystem zur Ausführung des oben beschriebenen Verfahrens kann im gleichen Gehäuse, in dem das Kamerasystem untergebracht ist, vorgesehen sein, d.h. die Kamera umfasst das Computersystem zur Ausführung des oben beschriebenen Verfahrens.

Dies bietet den Vorteil, dass lange Übertragungswege zwischen Kameras und Computersystem vermieden werden, und die Montage des Gesamtsystems vereinfacht wird.

### Verfahren zur Trainieren eines Deep-Learning Systems

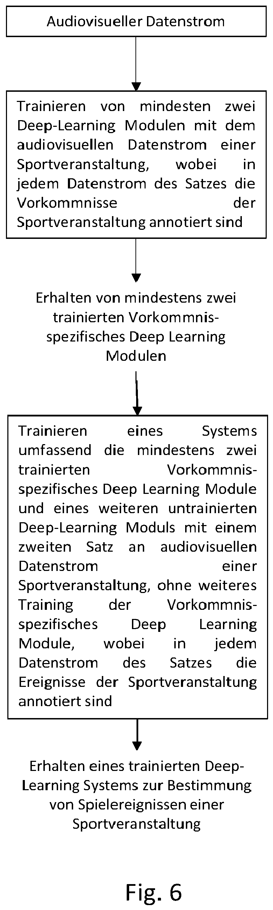

Ferner offenbart ist ein Verfahren zum Trainieren eines Deep-Learning Systems umfassend Deep-Learning Module, wie es in Figur 6 illustriert ist, umfassend:
a. Bereitstellen von untrainierten mindestens zwei Deep-Learning Modulen;
b. Trainieren der mindesten zwei Deep-Learning Module mit einem ersten Satz an audiovisuellen Datenstrom einer Sportveranstaltung, wobei in jedem Datenstrom des Satzes die Vorkommnisse der Sportveranstaltung annotiert sind und zwei Vorkommnisse in dem audiovisuellen Datenstrom mit einem Spielereignis assoziiert sind;
c. Erhalten von mindestens zwei trainierten Vorkommnis-spezifisches Deep-Learning Modulen;
d. Bereitstellen eines Deep-Learning System bestehend aus den mindestens zwei trainierten Vorkommnis-spezifisches Deep-Learning Modulen und eines untrainierten weiteren Deep-Learning Moduls, das die Ergebnisse der mindestens zwei trainierten Vorkommnis-spezifisches Deep-Learning Module als Input erhält;
e. Trainieren des weiteren untrainierten Deep-Learning Moduls in dem System mit einem zweiten Satz an audiovisuellen Datenstrom einer Sportveranstaltung, ohne weiteres Training der Vorkommnis-spezifisches Deep-Learning Module, wobei in jedem Datenstrom des Satzes die Ereignisse der Sportveranstaltung annotiert sind;
f. Erhalten eines trainierten Deep-Learning Systems zur Bestimmung von Spielereignissen einer Sportveranstaltung.

Der erste und zweite Satz an audiovisuellen Datenströmen kann mindestens 10000, 50000, oder 100000 audiovisuelle Datenströme von Sportveranstaltungen umfassen.

Die individuellen vorgefundenen Bedingungen bei Spielveranstaltungen sehr unterschiedlich sein können (z.B. Sichtverhältnisse). Daher war es erstrebenswert, ein besonders robustes präzises System zu entwickeln. Das hier beschriebene zweistufige System mit zweistufigen Trainingsphase hat sich als präziser erwiesen, als System bei denen das System aus weniger Modulen besteht.

Die Deep-Learning Module umfassen vorzugsweise Konvolutionen, d.h. die Deep-Learning Module gehören zur Klasse der Convolutional Neural Networks.

### System und Kamerasystem

Offenbart wird daher auch ein Deep-Learning System, das durch das oben beschriebene Verfahren zum Trainieren eines Deep-Learning Systems erhalten wurde.

Offenbart wird ein Deep-Learning System, das dazu eingerichtet, das Verfahren zur automatischen Analyse von Spielereignissen einer Sportveranstaltung wie oben beschrieben durchzuführen.

Das Deep-Learning System kann in einem Computersystem bzw. in einem Kamerasystem, wie oben beschrieben vorgesehen sein.

Das System, insbesondere die Kamera, bietet zusammen mit den integrierten KI-Modulen die Möglichkeit, alle Spiele vollautomatisiert erstmals in hoher Auflöslung (z.B. Full-HD) darzustellen. Unter Zuhilfenahme unterschiedlicher KI-Algorithmen kann das Verfolgen und Streamen von Sportveranstaltungen vollkommen autonom, automatisch oder manuell, z.B- via Cloud-Steuerung erfolgen. Dabei kann die künstliche Intelligenz eigenständig diverse Spielsituationen identifizieren und mögliche Bewegungen antizipieren. Eine nahezu latenzfreie Umsetzung kann eine störungsfreie Übertragung des Spielgeschehens in allen bekannten Ballsportarten ermöglicheb und macht das System zusätzlich einsetzbar z.B. für Wett-Plattformen. Die Kamera kann eine Höhe von weniger als 20 cm oder 16cm besitzen. Die Kamera kann wetterresistent sein und kann mit mehreren einzelnen Optiken und/oder einem integrierten Modem (z.B. 4G-Modem und/oder 5G ready, 5G-Modem) geben. Sie kann an einem Mast, dem Stadiondach oder in der Sporthalle auf Höhe der Mittellinie montiert werden. Mit einem horizontalen Sichtbereich von über 180° kann das Spielgeschehen vollständig erfasst und von der KI ausgewertet werden.

## Patentansprüche

1. Verfahren zur automatischen Analyse von Spielereignissen einer Sportveranstaltung umfassend:
a. Erhalten eines audiovisuellen Datenstroms der Sportveranstaltung;
b. Bestimmen mindestens zweier Vorkommnisse in dem audiovisuellen Datenstrom, die mit einem Spielereignis assoziiert sind, mit ersten Deep-Learning Modulen, wobei für die Bestimmung jedes Vorkommnis ein eigenes Vorkommnis-spezifisches Deep-Learning Modul vorgesehen ist;
c. Bestimmen des Spielereignisses basierend auf dem Ergebnis ausgegeben durch die Vorkommnis-spezifischen Deep-Learning Module für das Spielereignis mit einem Ereignis-spezifischen Deep-Learning Model;
d. Ausgabe des Ergebnisses aus Schritt c.

2. Verfahren gemäß Anspruch 1,
wobei Schritt a) umfasst
Erhalten eines audiovisuellen Datenstroms der Sportveranstaltung;
Aufspalten des audiovisuellen Datenstroms in einen Video- und einen Audiodatenstrom;
wobei Schritt c) ferner umfasst:
mindestens eines der Vorkommnisse, die mit dem Spielereignis assoziiert sind, wird in dem Videodatenstrom durch ein für das Vorkommnis spezifisches Deep-Learning Modul bestimmt,
und mindestens eines der Vorkommnisse, die mit dem Spielereignis assoziiert sind, wird in dem Audiodatenstrom durch für das Vorkommnis spezifisches Deep-Learning Modul bestimmt.

3. Verfahren gemäß den vorstehenden Ansprüchen,
wobei das Spielereignis-spezifische Modul ein Modul zur Bestimmung des Beginnes oder der Fortsetzung eines Spiels ist.

4. Verfahren gemäß den vorstehenden Ansprüchen,
wobei das Spielereignis-spezifische Modul ein Modul zur Bestimmung eines Punktes in der Spielwertung ist.

5. Verfahren gemäß Ansprüchen 3 oder 4,
wobei das Vorkommnis-spezifischen Module
ein Modul zum Bestimmen des Beginnes oder der Fortsetzung des Spiels in einem vorbestimmten Bereich in dem Videodatenstrom, und/oder
ein Modul zum Bestimmen eines erzielten Punktes Spiels in einem vorbestimmten Bereich des Spielortes in dem Videodatenstrom ist.

6. Verfahren gemäß einem der Ansprüchen 3-5,
wobei das Vorkommnis-spezifischen Module
ein Modul zum Bestimmen der akustischen Reaktion des Publikums in dem Audiodatenstrom ist, und/oder
ein Modul zum Bestimmen der akustischen Signale des Schiedsrichters mit einem für die akustischen Schiedsrichtersignale spezifischem Deep-Learning Modul Publikums in dem Audiodatenstrom.

7. Verfahren gemäß den vorstehenden Ansprüchen,
wobei Schritt 1.a) zusätzlich umfasst:
Bestimmen der Position der unbeweglichen Objekte des Spielortes in dem Videodatenstrom, die an oder auf dem Spielfeld vorgesehen sind mit einem Objekt-spezifischen Deep-Learning Model, wobei das Ergebnis dieser Bestimmung den Vorkommnis-spezifischen Module übertragen wird

8. Verfahren gemäß den vorstehenden Ansprüchen,
wobei Schritt a) zusätzlich umfasst:
Bestimmen der Position und Identität der beweglichen Objekte in dem Videodatenstrom, die an der Sportveranstaltung teilnehmen, mit einem für bewegliche Objekte spezifischem Deep-Learning Model.

9. Verfahren gemäß Anspruch 8,
wobei die beweglichen Objekte die Spieler sind, und ferner umfassend in Schritt a)
Bestimmen der Zugehörigkeit der Spieler zu einer Mannschaft mit einem für die Mannschaftszugehörigkeit spezifischem Deep-Learning Modul basierend auf dem Ergebnis der Bestimmung aus Anspruch 8.

10. Verfahren gemäß Anspruch 9,
ferner umfassend in Schritt a)
Bestimmen der Bewegungsmuster und des Laufweges der Spieler mit einem Modul basierend auf dem Ergebnis der Bestimmungen aus Anspruch 8 und 9.

11. Verfahren gemäß Anspruch 8,
wobei die beweglichen Objekte Schiedsrichter und Torhüter sind,
ferner umfassend in Schritt a)
Bestimmen der Handlungen der Schiedsrichter und der Torhüter mit einem für den Schiedsrichter spezifischem Deep-Learning Modul basierend auf dem Ergebnis der Bestimmungen aus Anspruch 8.

12. Verfahren gemäß einem der vorstehenden Ansprüche,
wobei die Ausgabe des Ergebnisses in Schritt d) an ein Modul zur Analyse der Spielveranstaltung übermittelt wird.

13. Verfahren gemäß Anspruch 12, ferner umfassend
Erstellen eines Datensatzes umfassend die bestimmten Spielereignisse und den Spielstand durch das Modul zur Analyse der Spielveranstaltung.

14. Verfahren gemäß einem der vorstehenden Ansprüche,
wobei die Vorkommnis-spezifisches Deep-Learning Module 40-80 Schichten aufweisen; und/oder die Ereignis-spezifisches Deep-Learning Module 10-15 Schichten aufweisen.

15. Verfahren gemäß einem der vorstehenden Ansprüche, ferner umfassend den Schritt
Bestimmen in dem Audiovideostream eines Teilbereichs des Videodatenstreams, in dem sich die zentrale Handlung des Spiels vorgenommen wird mit einem Videodaten-Erstellungs-Deep-Learning Modul,
Erstellen eines zweiten Videodatenstroms, bei dem jeder Frame nur den bestimmten Teilbereich des ersten Videodatenstroms enthält.

16. Verfahren gemäß Anspruch 15, ferner umfassend Einbetten der bestimmten Spielereignisse und des Spielstandes, des zum ersten Videodatenstrom gehörenden Audiodatenstroms und des zweiten Videodatenstroms in einen Datencontainer.

17. Verfahren zum Trainieren eines Deep-Learning Systems umfassend Deep-Learning Module umfassend:
a. Bereitstellen von untrainierten mindestens zwei Deep-Learning Modulen;
b. Trainieren der mindesten zwei Deep-Learning Module mit einem ersten Satz an audiovisuellen Datenstrom einer Sportveranstaltung, wobei in jedem Datenstrom des Satzes die Vorkommnisse der Sportveranstaltung annotiert sind und die zweier Vorkommnisse in dem audiovisuellen Datenstrom einem Spielereignis assoziiert sind;
c. Erhalten von mindestens zwei trainierten Vorkommnis-spezifisches Deep-Learning Modulen;
d. Bereitstellen eines Deep-Learning System bestehend aus den mindestens zwei trainierten Vorkommnis-spezifisches Deep-Learning Modulen und eines untrainierten weiteren Deep-Learning Moduls, das die Ergebnisse der mindestens zwei trainierten Vorkommnis-spezifisches Deep-Learning Module als Input erhält;
e. Trainieren des weiteren untrainierten Deep-Learning Moduls in dem System mit einem zweiten Satz an audiovisuellen Datenstrom einer Sportveranstaltung, ohne weiteres Training der Vorkommnis-spezifisches Deep-Learning Module, wobei in jedem Datenstrom des Satzes die Ereignisse der Sportveranstaltung annotiert sind;
f. Erhalten eines trainierten Deep-Learning Systems zur Bestimmung von Spielereignissen einer Sportveranstaltung.

18. Verfahren gemäß Anspruch 17, wobei der erste und zweite Satz an audiovisuellen Datenströmen mindestens 10000, 50000, oder 100000 audiovisuelle Datenströme von Sportveranstaltungen umfasst.

19. Computersystem umfassend das Deep-Learning System erhältlich durch das Verfahren gemäß Ansprüchen 17 oder 18 und konfiguriert das Verfahren gemäß den Ansprüchen 1-16 durchzuführen.

20. Kamerasystem umfassend das Computersystem gemäß Anspruch 1.
